(19)

Europäisches
Patentamt
European
Patent Office
Office européen
des brevets

(11) **EP 3 933 432 A1**

(12) **EUROPEAN PATENT APPLICATION**

(43) Date of publication:
**05.01.2022 Bulletin 2022/01**

(21) Application number: **20382598.9**

(22) Date of filing: **03.07.2020**

(51) Int Cl.:
*G01S 7/292* (2006.01)    *G01S 7/295* (2006.01)
*G01S 7/03* (2006.01)    *G01S 13/10* (2006.01)
*G01S 13/42* (2006.01)    *G01S 13/524* (2006.01)
*G01S 13/86* (2006.01)    *G01S 13/88* (2006.01)
*G01S 13/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **Tulino, Antonia
Red Bank, NJ 07701 (US)**

• **Llorca, Jaime
Jersey City, NJ 07302 (US)**
• **Huang, Howard
New Providence, NJ 07974 (US)**
• **Sanchez-Fernandez, Matilde
28015 Madrid (ES)**

(74) Representative: **Balder IP Law, S.L.
Paseo de la Castellana 93
5ª planta
28046 Madrid (ES)**

(54) **APPARATUS, METHOD, AND SYSTEM FOR PROVIDING SUPER-RESOLUTION TARGET ESTIMATION VIA ATOMIC NORM OPTIMIZATION**

(57) An approach is provided for super-resolution target estimation via atomic norm optimization. The approach, for example, involves collecting (301) one or more measurements of backscatter signal data from an antenna deployment. The approach also involves processing (305) the one or more measurements to obtain at least one structured vector with a structure that includes one or more signal parameters. The approach further involves processing (305), using an atomic norm optimization, the at least one structured vector to separate a plurality of echo signals in the backscatter signal data. The atomic norm optimization outputs the separated plurality of echo signals as a matrix comprising a plurality of dimensions respectively representing the one or more signal parameters. The approach further involves decomposing (307) the matrix to extract a plurality of frequencies indicating respective values of the one or more signal parameters for the plurality of echo signals.

FIG. 3

300

COLLECT MEASUREMENTS OF BACK-SCATTER SIGNAL DATA FROM AN ANTENNA DEPLOYMENT
— 301

OPTIONALLY PROJECT THE MEASUREMENTS INTO A SUPER RESOLUTION SPACE
— 303

PROCESS MEASUREMENTS INTO A STRUCTURED VECTOR WITH HIDDEN SIGNAL PARAMETER; AND PROCESS THE STRUCTURED VECTOR USING ATOMIC NORM OPTIMIZATION TO OUTPUT A MATRIX REPRESENTING THE SIGNAL PARAMETERS
— 305

DECOMPOSE THE MATRIX TO EXTRACT FREQUENCIES OF THE SIGNAL PARAMETERS FOR THE ECHO SIGNALS
— 307

EP 3 933 432 A1

**Description**

BACKGROUND

Many communication and entertainment services are based on a precise and accurate knowledge of positioning or localization awareness of people, objects, and/or devices, particularly in indoor environments where conventional positioning methods (e.g., satellite-based positioning, classical radar positioning, etc.) may be unavailable or inaccurate. In addition, positioning via classical radar or similar technologies generally provides only two-dimensional (2D) position estimations or three-dimensional (3D) at limited spatial resolution. As a result, service providers face significant technical challenges to enable accurate positioning (e.g., three-dimensional (3D) positioning), velocity, and/or other equivalent characteristics of various objects or targets.

SOME EXAMPLE EMBODIMENTS

Therefore, there is a need for providing super-resolution target estimation via atomic norm optimization (e.g., estimating target position or velocity based on signal sensing systems).

According to one embodiment, an apparatus comprises at least one processor, and at least one memory including computer program code for one or more computer programs, the at least one memory and the computer program code configured to, with the at least one processor, cause, at least in part, a collection of one or more measurements of back-scatter signal data from an antenna deployment. The apparatus is also caused to process the one or more measurements to obtain at least one structured vector with a structure that includes, at least in part, one or more signal parameter (e.g., position/velocity parameters such as but not limited to delay, Doppler shift, azimuth, elevation, etc.). The apparatus is further caused to process, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus is further caused to, at least in part, decompose the matrix to extract a plurality of frequencies indicating respective values of the one or more signal parameters for the plurality of echo signals.

According to another embodiment, a method comprises causing, at least in part, a collection of one or more measurements of back-scatter signal data from an antenna deployment. The method also comprises processing the one or more measurements to obtain at least one structured vector with a structure that includes, at least in part, one or more signal parameter (e.g., position/velocity parameters such as but not limited to delay, Doppler shift, azimuth, elevation, etc.). The method further comprises processing, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The method further comprises causing, at least in part, a decomposition of the matrix to extract a plurality of frequencies indicating respective values of the one or more signal parameters for the plurality of echo signals.

According to another embodiment, a non-transitory computer-readable medium comprising program instructions for causing an apparatus to perform at least a collection of one or more measurements of back-scatter signal data from an antenna deployment. The apparatus is also caused to process the one or more measurements to obtain at least one structured vector with a structure that includes, at least in part, one or more signal parameter (e.g., position/velocity parameters such as but not limited to delay, Doppler shift, azimuth, elevation, etc.). The apparatus is further caused to process, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus is further caused to, at least in part, decompose the matrix to extract a plurality of frequencies indicating respective values of the one or more signal parameters for the plurality of echo signals.

According to another embodiment, a computer program comprising instructions for causing an apparatus to perform at least a collection of one or more measurements of back-scatter signal data from an antenna deployment. The apparatus is also caused to process the one or more measurements to obtain at least one structured vector with a structure that includes, at least in part, one or more signal parameter (e.g., position/velocity parameters such as but not limited to delay, Doppler shift, azimuth, elevation, etc.). The apparatus is further caused to process, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus is further caused to, at least in part, decompose the matrix to extract a plurality of frequencies indicating respective values of the one or more signal parameters for the plurality of echo signals.

According to another embodiment, a computer-readable medium comprising instructions for causing an apparatus to perform at least a collection of one or more measurements of back-scatter signal data from an antenna deployment. The apparatus is also caused to process the one or more measurements to obtain at least one structured vector with a structure that includes, at least in part, one or more signal parameter (e.g., position/velocity parameters such as but not limited to delay, Doppler shift, azimuth, elevation, etc.). The apparatus is further caused to process, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus is further caused to, at least in part, decompose the matrix to extract a plurality of frequencies indicating respective values of the one or more signal parameters for the plurality of echo signals.

According to another embodiment, a non-transitory computer-readable storage medium comprising instructions for causing an apparatus to perform at least a collection of one or more measurements of back-scatter signal data from an antenna deployment. The apparatus is also caused to process the one or more measurements to obtain at least one structured vector with a structure that includes, at least in part, one or more signal parameter (e.g., position/velocity parameters such as but not limited to delay, Doppler shift, azimuth, elevation, etc.). The apparatus is further caused to process, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus is further caused to, at least in part, decompose the matrix to extract a plurality of frequencies indicating respective values of the one or more signal parameters for the plurality of echo signals.

According to another embodiment, an apparatus comprises means for causing, at least in part, a collection of one or more measurements of back-scatter signal data from an antenna deployment. The apparatus also comprises means for processing the one or more measurements to obtain at least one structured vector with a structure that includes, at least in part, one or more signal parameter (e.g., position/velocity parameters such as but not limited to delay, Doppler shift, azimuth, elevation, etc.). The apparatus further comprises means for processing, using an atomic norm optimization, the at least one structured vector to separate a plurality of echo signals in the back-scatter signal data. The atomic norm optimization outputs the separated plurality of echo signals as a matrix comprising a plurality of dimensions respectively representing the one or more signal parameters. The apparatus further comprises means for causing, at least in part, a decomposition of the matrix to extract a plurality of frequencies indicating respective values of the one or more signal parameters for the plurality of echo signals.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The example embodiments of the invention are illustrated by way of example, and not by way of limitation, in the figures of the accompanying drawings:

FIG. 1A is a diagram of a system capable of providing super-resolution position estimation via atomic norm optimization, according to one embodiment;

FIG. 1B are diagrams of antenna deployments for receiving back-scatter signal data, according to various embodiments;

FIG. 2 is a diagram of the components of a positioning platform, according to one embodiment;

FIG. 3 is a flowchart of a process for providing super-resolution position estimation via atomic norm optimization, according to one embodiment;

FIG. 4A are diagrams illustrating a probing signal from a transmitter and a back-scatter signal received at an antenna deployment in a pulse repetition time (PRT), according to one embodiment;

FIG. 4B are diagrams illustrating a probing signal from a transmitter and a back-scatter signal received at an antenna deployment in a sequence of pulse repetition times (PRTs), according to one embodiment;

FIG. 5 shows a flowchart with mathematical formula corresponding to FIG. 3, according to one embodiment;

FIG. 6 is a diagram illustrating a sample matrix decomposition process, according to one embodiment;

FIG. 7 is a diagram of a user interface for presenting target positions and other relevant data, according to one embodiment;

FIG. 8 is a diagram of hardware that can be used to implement an embodiment;

FIG. 9 is a diagram of a chip set that can be used to implement an embodiment; and

FIG. 10 is a diagram of a mobile terminal (e.g., handset or vehicle or part thereof) that can be used to implement an embodiment.

DESCRIPTION OF SOME EMBODIMENTS

Examples of a method, apparatus, and computer program for super-resolution target estimation via atomic norm optimization are disclosed. In the following description, for the purposes of explanation, numerous specific details are set forth in order to provide a thorough understanding of the example embodiments of the invention. It is apparent, however, to one skilled in the art that the embodiments of the invention may be practiced without these specific details or with an equivalent arrangement. In other instances, structures and devices are shown in block diagram form in order to avoid unnecessarily obscuring the embodiments of the invention.

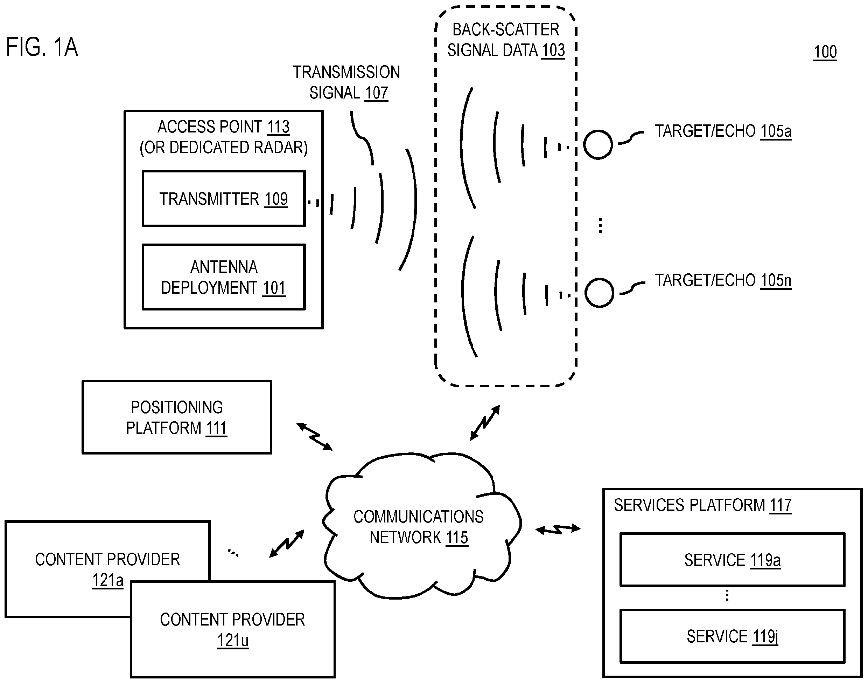

FIG. 1A is a diagram of a system 100 capable of determining or providing super-resolution position estimation via atomic norm optimization, according to one example embodiment. As discussed above, many current and future communication and entertainment services are based on precise and accurate knowledge of where people, objects, devices, etc. are located in the environment. The need for his positioning data is particularly acute in indoor environments. There are different technologies available that can be used to generate virtual location maps of objects/targets such as classical radar approaches or opportunistic radar/sensing. Nevertheless, these technologies have certain limitations such as the accuracy with which an object can be found in a three-dimensional (3D) environment and the tracking of users/devices/objects when their movement is slow. Furthermore, these technologies have mainly considered a single target in a probed angular sector and exploit the correlation property of the probing signal for target detection and parameter estimation, thereby resulting in a grid-based position estimation (e.g., with each grid cell corresponding to a probed angular sector). Such correlation-based processing may also suffer from target masking and spurious detections that are caused by the secondary lobes of the cross-ambiguity function in a multi-target environment. Therefore, there are significant technical challenges to overcoming these limitations and achieving higher accuracy 3D position estimation of multiple targets at a time.

To address these limitations and technical challenges, the system 100 of FIG. 1A introduces a super-resolution approach which is based on atomic norm optimization or minimization (used herein interchangeably) of signal measurements that enables grid-less high precision estimation of parameters for positioning, localization awareness, and/or tracking of objects in an environment (e.g., azimuth, elevation, range, and Doppler shift). The system 100, for instance, exploits both the spatial resolution provided by multiple antennas at the receiver side together and the high resolution in range and movement speed provided by high-bandwidth transmissions systems (e.g., available at mmWave).

In one embodiment, the system applies an antenna deployment 101 to collect back-scatter signal data 103 comprising measurements of echo signals bouncing off one or more targets/echoes 105a-105n (collectively referred to as targets 105 or echoes 105) in response to a transmission signal 107 originating from a transmitter 109. The back-scatter signal data 103 includes signal measurements (e.g., a measurement vector including parameters for delay, Doppler shift, attenuation, spatial data indicated by the receiver's multiple antennas) made at one or more antennas of the antenna deployment 101. These measurements are "sparse" with respect to the positioning or other signal parameters (e.g., 3D positioning parameters such range, azimuth, and elevation; as well as other parameter such as velocity, etc.). This means, for instance, that the measurements are missing values for the positioning, velocity, or other signal parameters that the system 100 is to estimate.

In one embodiment, the system 100 can apply a positioning platform 111 to process the measurements using atomic norm optimization or minimization to estimate positioning/velocity/signal parameters of interest (e.g., range, azimuth, elevation, and/or Doppler shift). Atomic norm optimization, for instance, fits the back-scatter signal data 103 measurement to one or more structured vectors (e.g., a signal structure specifying one or more associated positioning/velocity/signal parameters such as a signal vector that corresponds to a target/echo 105 and its estimated positioning or velocity parameters) based on optimizing or minimizing a loss function (e.g., by finding a solution of the optimization problem of the atomic norm optimization as described in further detail in the embodiments below). In one embodiment, the signal parameters to be estimated (e.g., position, velocity, etc.) can be referred to as "hidden" parameters because they are not explicitly found in the signal measurements. Instead, these hidden signal parameters can be derived from the raw measurements, for instance, by using atomic norm optimization according to the embodiments described herein. In other words, the measurements of the back scattered signal are processed to obtain a structured vector (e.g., a vector with a specific known structure) that contains the hidden parameters (e.g., azimuth, elevation, range, Doppler shift, etc.) to be extracted. Once the system 100 has this structured vector, the system 100 can apply an atomic norm optimization to this vector and then decompose the matrix resulting from this optimization process to recover the frequencies containing information on the signal parameters to be estimated.

In one embodiment, the system 100 can use a super-resolution process in combination with atomic norm optimization or minimization. For example, prior to fitting the back-scatter signal data 103, the system 100 can create super-resolution samples of the back-scatter signal data 103 by projecting the measurements into a higher resolution space (e.g., higher resolution that the original resolution of the measurements). In one embodiment, within this super-resolution space, the atomic norm optimization outputs the separated plurality of echo signals as a matrix comprising a plurality of dimensions respectively representing the one or more signal parameters (e.g., positioning parameters to be estimated). The positioning platform 111 then causes, at least in part, a decomposition of the matrix to extract a plurality of frequencies indicating respective values of the one or more signal parameters for the plurality of echo signals. For example, the positioning platform 111 obtains a range parameter, an azimuth parameter, an elevation parameter, and a Doppler shift parameter for positioning, velocity estimation, localization awareness, and/or tracking. It is noted that positioning parameters are provided as illustrations of parameters that can be estimated. It is contemplated that the embodiments described herein can be used to estimate any parameter that can be extracted as frequencies using atomic norm optimization.

As such, the system 100 exploits both the spatial resolution provided by the antenna deployment 101 at the receiver side together and the high resolution in range and movement speed provided by the bandwidth of the signal transmission system used by the system 100. For example, bandwidth capable of position estimation according to the embodiments described herein is available at millimeter wave (mmWave) frequencies.

In one embodiment, the approach of the embodiments described herein is applicable to the receiver side, therefore many different transmission technologies can used according to the embodiments described herein. The transmission technologies can provide for dedicated positioning estimation or sensing (e.g., a dedicated radar or equivalent system) or for opportunistic sensing (e.g., wireless communication systems). For example, in one embodiment, the transmission technology can be based on the IEEE 802.11ad standard (or equivalent) for wireless networking. In general, the system 100 can deploy an access point 113 with a transmitter 109 and the antenna deployment 101. The transmitter 109 sends a transmission signal 107 that then bounces of one or more target/echoes 105a-105n (e.g., people, objects, devices, etc.) capable of reflecting the transmission signal 107 as back-scatter signal data 103 for measurement at the antenna deployment 101 (e.g., receiver). The transmission signal 107 need not be a dedicated position estimation signal. Instead, the transmission signal 107 may be used for other normal functions of the transmission system including, but not limited to, a handshaking signal, a communication packet, an operation signal, an outage alert, a sensor reading signal, etc. Depending on the transmission protocol used by the transmission system, the transmission signal 107 may be pulsed or continuously transmitted at diverse time scales, volumes and manners, e.g., synchronously (e.g. at a fixed sampling rate) or asynchronously (e.g., more event-driven).

By way of example, the access point 113 can send the transmission signal 107 for wireless communication, in addition to generating back-scatter signal data 103 for estimating the target positioning. As noted above, the transmission signal 107 may be incorporated into the IEEE 802.11ad standard to provide opportunistic sensing. Although the example embodiments below are described with respect to opportunistic sensing using IEEE 802.11ad devices, it is contemplated that the embodiments are applicable to any type of transmission system that employ either opportunistic or dedicated position sensing or estimation. The IEEE 802.11ad standard operates at 60GHz and very high throughput (VHT) up to 8 Gbps using one single antenna transmission. IEEE 802.11ad uses the V band of millimeter wave (mmWave) frequency, thus generally has a limited communication range (e.g., a few meters). In one embodiment, the system 100 can use the pair of complementary Golay sequences contained in the preamble of the single-carrier physical (SCPHY) packet to extract some relevant parameters from a reflecting target in front of the transmitter 109.

The system 100 can exploit the sector level sweep (SLS) phase and/or the data transmission interval (DTI) of the IEEE 802.11ad communication standard to implement an opportunistic radar at mmWave and makes use of atomic norm optimization for detecting multiple targets (echoes) 105 and jointly estimating their parameters (distance, velocity, and azimuth and elevation of the target position). Exploiting the special structure of the prospective echoes generated by the multiple targets, the system 100 can use atomic norm optimization to separate one-by-one the prospective echoes contained in the received back-scatter signal data 103. As a position sensing signal (probing signal), the system 100 can use a portion of the control physical (CPHY) packet transmitted during the SLS phase and/or a portion of the single-carrier physical (SCPHY) packet transmitted during the data transmission interval (DTI). In the latter case, the system 100 further allows the joint processing of the portion of multiple (non-necessarily consecutive) SCPHY.

In another embodiment, the system 100 deploys a dedicated radar to provide super-resolution position estimation via atomic norm optimization, without carrying other functions. By way of example, the dedicated radar sends a transmission signal towards a target/echo 105 (e.g., a person or animal) just to generate back-scatter signal data 103 for estimating the target positioning.

In one embodiment, the transmitter 109 is collocated with the antenna deployment 101 ("monostatic"). In another embodiment, the transmitter 109 is located away from the antenna deployment 101 with a predetermined distance ("bistatic").

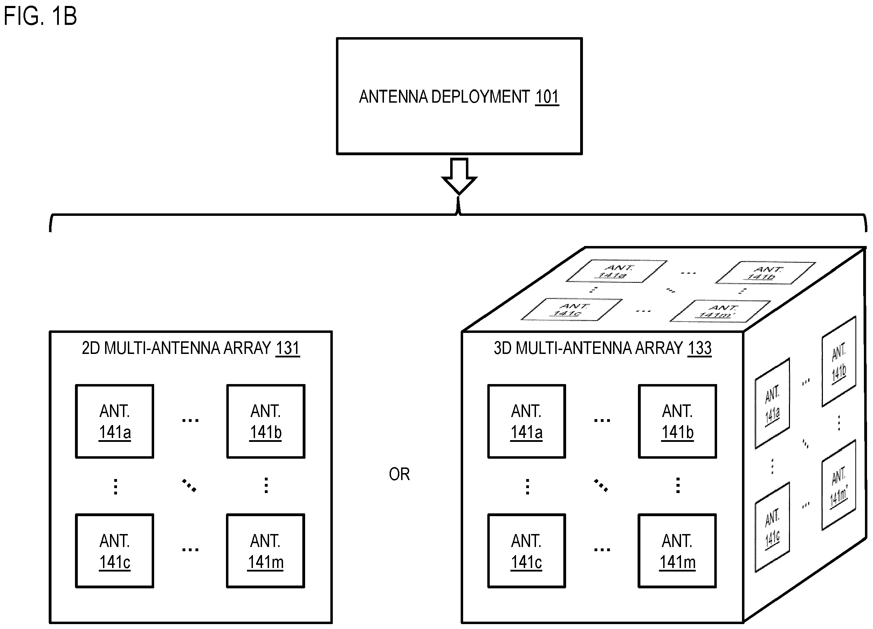

The transmitter 109 and/or the antenna deployment 101 may include radiation elements arranged in a single line (linear array), in circular pattern (circular array), in a two-dimensional grid (planar array), in a 3D surface (conformal array), etc. By way of example, FIG. 1B is a diagram of the example antenna deployments 101 for receiving back-scatter signal data 103, according to various embodiments. In one embodiment, the antenna deployment 101 includes a two-dimensional (2D) multi-antenna array 131 with antennas 141a-141m arranged in a grid. In the other embodiment, the antenna deployment 101 includes a three-dimensional (3D) multi-antenna array 133 with antennas 141a-141m" arranged in a cube. In one example, the system 100 can employ a single antenna deployment 101 (not shown) when the spatial sampling of the back-scatter signal data 103 is not needed. Instead, the signal antenna deployment 101, for instance, can collect back-scatter data 103 over a temporal domain to perform atomic norm optimization and signal parameter estimation over the temporal domain.

The target/echoes 105 may include people, objects (e.g., animals, keys, merchandises, etc.), devices, etc. that can reflect transmission signals 107 back towards the antenna deployment 101. Examples of the devices include but are not limited to interrelated computing devices, mechanical and digital machines (e.g., mobile phones, digital cameras, e-readers, health/fitness devices, medical sensing devices, media players, smart speakers, gaming consoles, blue-ray players, high-definition TVs, home appliances, office appliances, robots, vehicles, etc.), objects, etc. with unique identifiers (UIDs) and transfer data over a network without requiring human-to-human or human-to-computer interaction. The environment of interest may be a home, office, gym, library, classroom, playground, clinic, pet store, restaurant, theater, supermarket, warehouse, data center, parking lot, etc.

For each target, the system 100 allows a 3D positioning providing the range, azimuth and elevation coordinates (or other equivalent 3D coordinates) of where the target is, together with the Doppler shift, that enables movement tracking of the target.

The system 100 may be embedded/incorporated in a wireless communication system (e.g. 5G New Radio (5G NR), NB-IoT (Narrowband Internet of Things), a device operating with the wireless communication system (e.g., an Internet of Things (IoT) device), and/or any other equivalent system (e.g., LoRaWAN® (Long Range Low-power wide-area network), Low-power Wide-Area Network (LPWAN)), a V2X (Vehicle-to-Everything) system, a vehicle, or any combination thereof).

In one embodiment, the antenna deployment 101 periodically reports estimated positions and/or velocities of a list of target/echoes 105 to a reference station, such as an access point 113, so as to create and maintain a global map of the environment where the target/echoes 105 present. In various embodiments, the positions and/or velocities of target/echoes 105 can be processed via machine learning (ML) and artificial intelligence (AI) to generate important insights of the targets, such as user activities (e.g., book reading, cooking, exercising, fainting, etc.), object monitoring (e.g., pet playing), IoT device operations (e.g., robot cleaning, failure or outage, etc.), etc. to maintain healthy and successful services and operations including but not limited to residential, industrial, factory, transportation, and other domains.

The various embodiments described herein provide for several technical advantages including but not limited to:

- Grid-less high precision estimation of relevant parameters for target positioning, localization awareness, and tracking targets such as users/devices/objects.

- Exploiting spatial resolution provided by multiple antennas at the receiver side and the high resolution in range and movement speed provided by the bandwidth available at mmWave without involving active equipment other than an antenna deployment.

- A 3D positioning providing the range, azimuth and elevation coordinates of a target, together with a Doppler shift that enables movement tracking of the target.

- Detecting multiple targets and jointly estimating parameters of distance, velocity, azimuth and elevation of a target.

- Requiring limited complexity and not suffering from near-far problem effects due to multiple targets at different distances from the collocated transmitter and receiver.

- To be applied to any type of sensing systems either properly designed radar or opportunistic radar, such as exploits either the SLS phase or the DTI phase of the IEEE 802.11ad communication standard at mmWave frequencies.

- Feeding target positions and/or velocity data via machine learning (ML) and artificial intelligence (AI) to generate important insights of the targets, such as user activities, object monitoring, IoT device operations, etc. to maintain healthy and successful services and operations.

The system 100 estimates target positions only subject to noise levels, yet without the signal bandwidth limitation as the classic approaches. In one embodiment, the system 100 can address potential noise level issue by applying high frequency signals, such as mmWave.

As noted above, the embodiments of the system 100 is not limited to position estimation applications. Instead, it is contemplated that the system 100 can be used any application or use case in which the parameters to be estimated involves a transformation/translation of raw data (e.g., distance) into frequency phase shift.

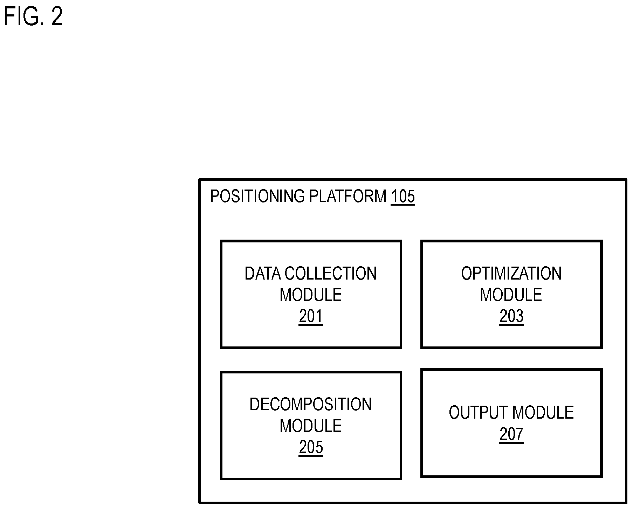

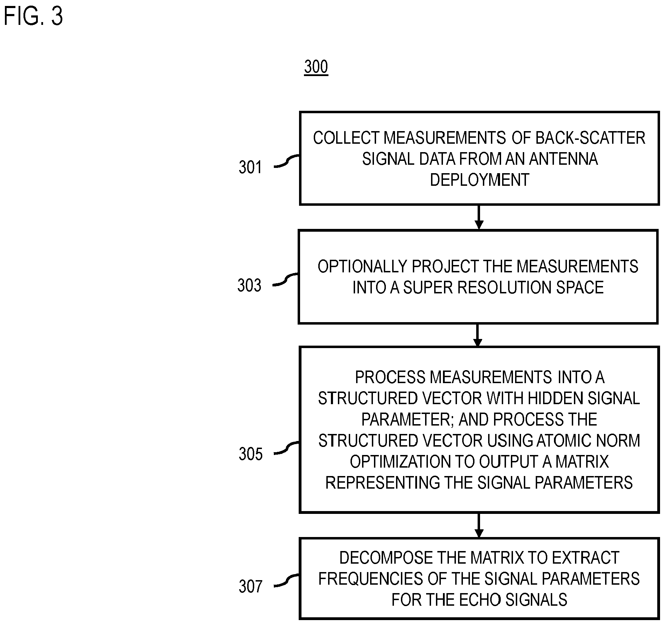

In one embodiment, the positioning platform 111 includes one or more components for providing super-resolution position estimation via atomic norm optimization, according to the various example embodiments described herein. As shown in FIG. 2, the positioning platform 111 includes a data collection module 201, an optimization module 203, a decomposition module 205, and an output module 207. The above presented modules and components of the positioning platform 111 can be implemented in hardware, firmware, software, or a combination thereof. It is contemplated that the functions of these components may be combined or performed by other components of equivalent functionality. Though depicted as a separate entity in FIG. 1A, it is contemplated that the positioning platform 111 may be implemented as a module of any of the components of the system 100 (e.g., in a component of a communications network 115 such as the access point 113, or any communication network device/equipment (e.g., a base station), in a services platform 117 that uses predictive analytics, in one or more services 119a-119j of the services platform 117, in content provider 121a-121u, and/or in any device (e.g., a mobile device, a smart speaker, a vehicle electronic control unit (ECU), etc.). In another embodiment, the positioning platform 111 and/or one or more of the modules 201-207 may be implemented as a cloud-based service, local service, native application, or combination thereof. This way, the source data and/or the target position/map data are also communicated via the communication network 113. The functions of these modules are discussed with respect to FIGs. 3-7 below.

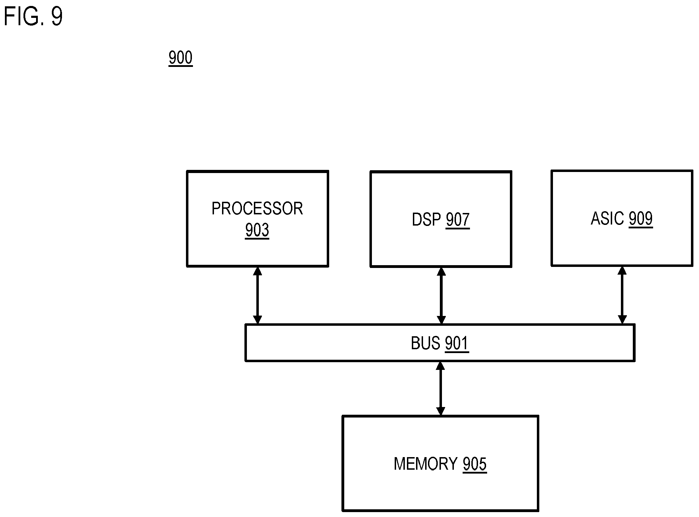

FIG. 3 is a flowchart of a process for providing super-resolution position estimation via atomic norm optimization, according to one example embodiment. In various embodiments, the positioning platform 111, any of the modules 201-207 of the positioning platform 111 may perform one or more portions of the process 300 and may be implemented in, for instance, a chip set including a processor and a memory as shown in FIG. 9. As such, the positioning platform 111 and any of the modules 201-207 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

In one embodiment, the process 300 represents at least part of a data processing pipeline for using collected back-scatter signal data 103 from target/echoes 105 (e.g., people) in a 3D environment to estimate target positions and/or velocities using analytics (e.g., an atomic norm optimization). Accordingly, in step 301 of the process 300, the positioning platform 111, such as the data collection module 201, cause, at least in part, a collection of one or more measurements of back-scatter signal data 103 from an antenna deployment 101. In one embodiment, the back-scatter signal data 103 is a reflection of waves, particles, or signals by a target back to the direction from which they came.

The antenna deployment 101 can be any phased array radar employing antennas (e.g., digital receivers) closely located to obtain high spatial resolution, Doppler resolution, and dynamic range. By way of example, the antenna deployment 101 is two-dimensional, such as a uniform 2D multiple-input multiple-output (MIMO) radar receiver. The uniform arrangement is adopted to simplify the analysis, yet other 2D antenna deployment may be used for different design considerations. In another embodiment, the antenna deployment 101 is three-dimensional, such as a cubic array, to extract even better spatial resolution, Doppler resolution, and dynamic range. The minimum number of antenna elements in the antenna deployment 101 depends on the number of targets, the spatial relationships among the targets, the sizes/shapes of the targets, etc.

In one embodiment, the one or more measurement vectors include, at least in part, a correspondent discrete signal vector with information about azimuth and/or elevation, a Doppler steering vector, and/or a delay steering vector. By way of example, the correspondent discrete signal vector corelates discrete echo signals with the multiple antennas of the MIMO radar receiver. The Doppler steering vector, for instance, is a temporal or time-domain steering vector corresponding to a single target that includes Doppler frequency measurements collected using multiple signal pulses over a period of time. The delay steering vector represents the set of time delays of the discrete echo signals evaluated at the antennas.

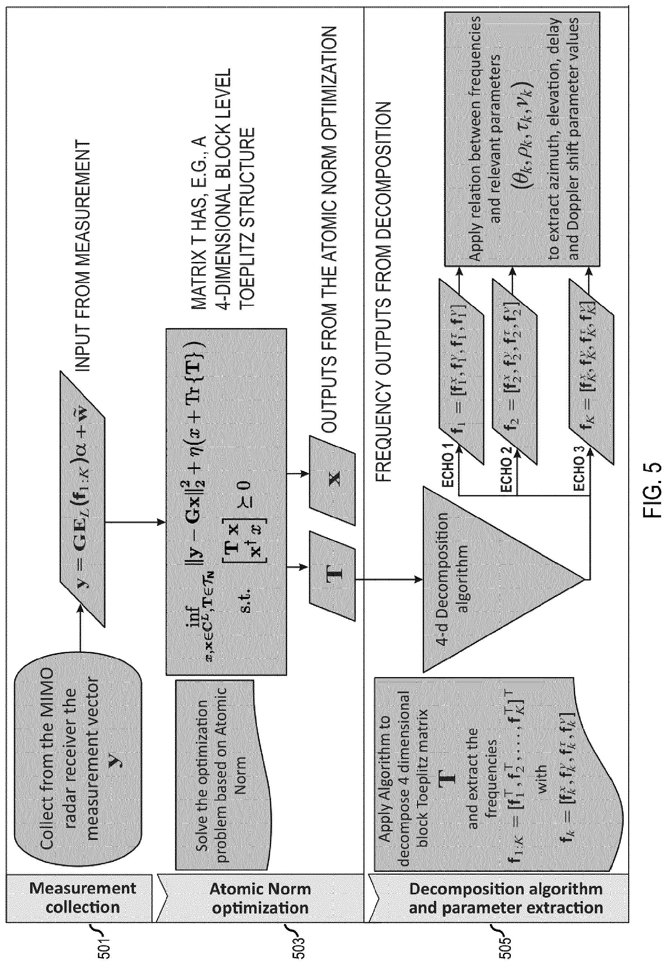

FIG. 5 shows a flowchart with mathematical formula corresponding to FIG. 3, according to one embodiment. In one embodiment, the positioning platform 111 identifies from the discrete measurement vector $\mathbf{y} \in C^L$, with $L = J_x \times J_y \times M \times F$, the set of frequencies, $\mathbf{f}_{1:K} = \{\mathbf{f}_1, \mathbf{f}_2, ..., \mathbf{f}_k\}$, with $\mathbf{f}_k = [f^x_k, f^y_k, f^\tau_k, f^v_k]^T \in T^4$, that characterizes the directions of arrival, Doppler, range.

The positioning platform 111 then applies a procedure including solving an optimization problem (P2), deriving the Vandermonde decomposition of a matrix obtained as the solution of (P2) using Algorithm 1, and applying equations on each of the echo signals to recover the angle of arrival in azimuth and elevation, a delay, and a Doppler shift of each echo signal as shown in FIG. 5 and explained in details later.

In one embodiment, the collection of the one or more measurements is performed during a processing window, and wherein a duration of the processing window is based on a time to a transmission of a next signal. In another embodiment, the back-scatter signal data 103 is collected using an opportunistic sensing. By way of example, the opportunistic sensing is based, at least in part, on a transmission of a sensing signal including, at least in part, a control physical (CPHY) packet, a single-carrier physical (SCPHY) packet, or a combination thereof; and wherein the plurality of echo signals include one or more echoes of the CPHY packet, the SCPHY packet, or a combination thereof. The back-scatter signal data 103 is collected over a processing window, and wherein a window duration of the processing window is determined based on a transmission duration of a preamble including, at least in part, the CPHY packet, the SCPHY packet, or a combination thereof.

At the transmitter side, in one embodiment, when estimating target locations without discriminating their respective velocities, the positioning platform 111 applies short-range sensing using the control physical (CPHY) packet transmitted during the sector level sweep (SLS) phase carried out in the beacon header interval (BHI), such as to implement a short-range surveillance radar.

In another embodiment, when also estimating the target velocities, in order to get accurate Doppler measurement, the positioning platform 111 allows the processed data samples span multiple physical packets. This rules out the use of the SLS phase, since only a single CPHY packet is transmitted in each sector and the positioning platform 111 has to focus on the data transmission interval (DTI) where a sequence of SCPHY packets are exchanged among the associated stations. While the SLS mimics the behavior of a scanning radar, thus allowing patrolling a wide angular sector, the directional transmissions occurring in the DTI only allows to sense the small sector illuminated by the antenna beam of a source node.

In another embodiment, the sensing performed in the SLS phase and in the DTI are complementary. In this case, the positioning platform 111 leverages the SLS phase to get a rough map of the surrounding environment, and applies the subsequent transmissions in the DTI to confirm and/or refine the previous determination, thereby realizing a form of alert-confirm detection (also referred to as two-step sequential detection). Such alert-confirm procedure could be facilitated by reserving some access periods of the DTI to send dummy SCPHY packets towards the directions that have generated an alert during the SLS phase. In one instance, the transmission of dummy signals is done when the communication system is idle. In another instance, the transmission of dummy signals is done in the presence of active communication links, since the consequent throughput loss remains under the control of an access point (AP) 113 and could be dynamically adjusted based on the requested services.

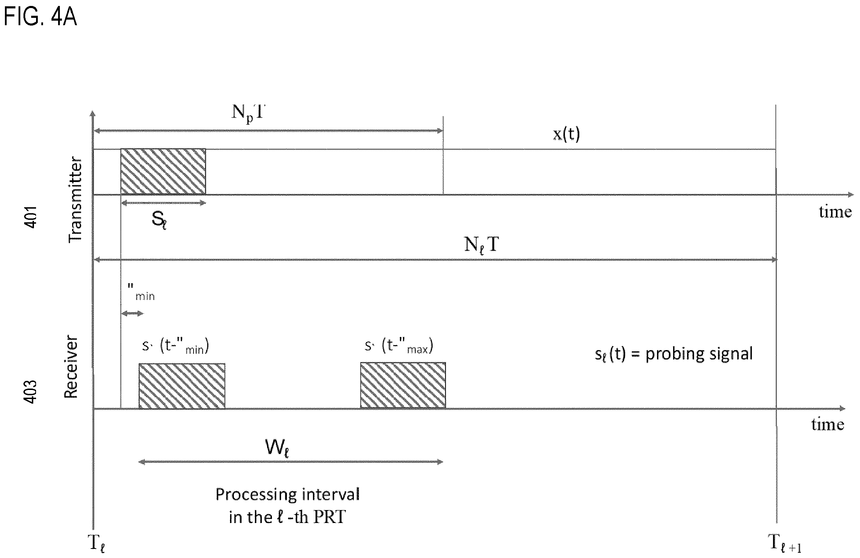

FIG. 4A are diagrams illustrating a probing signal 401 from a transmitter and a back-scatter signal 403 received at an antenna deployment in a pulse repetition time (PRT), according to one embodiment. In particular, FIG. 4A illustrates an operating mode of the radar in the $\ell$-th PRT, according to one embodiment. The portion that the positioning platform 111 considers as a probing signal, denoted by $s_\ell(t)$ is, in both CPHY and SCPHY packets, i.e., a suitable portion of the preamble contained in the first part of the CPHY and SCPHY packets as shown in FIG. 4A. The preamble is formed by the concatenation of a pair of Golay complementary sequences of length $N_g$ = 128; overall, the preamble contains $N_p$ = 3328 symbols, grouped in the short training field (STF) and channel estimation field (CEF), which are modulated by using a ($\pi/2$)-binary phase shift keying (BPSK) mapping. The remaining part of the CPHY and SCPHY packets contain a header and a payload each composed by 64 control bits, which specify the structure of the rest of the packet resulting in two 448 ($\pi/2$)-BPSK symbols and each block is then pre-pended by a guard interval containing a known sequence of 64 ($\pi/2$)-BPSK symbols. The payload carries a number of information bits variable from 1 to 262143 bytes for the SCPHY and resulting in a number of symbols ranging from 23168 to 539520 for CPHY.

The baseband signal sent by the transmitter or a source node towards an angular sector $\Phi$ can be written as:

$$x(t) = \sum_{\ell=1}^{F} \sqrt{\mathcal{P}T} \underbrace{\sum_{n=1}^{N_\ell} a_\ell(n) g_{\text{tx}}\big(t - (n-1)T - T_\ell\big)}_{x_\ell(t)} \qquad (*)$$

Where P is the transmit power, T is the symbol interval, gtx(t) is a unit-energy causal pulse with support [0,Tg], and $x_\ell(t)$ is the waveform corresponding to the $\ell$-th SCPHY packet which starts at the time instant $T_\ell$ and contains the unit-energy symbols $\{a_\ell(n)\}_{n=1}^{N_\ell}$.

The first $N_p$ symbols of each CPHY or SCPHY packet correspond to the common preamble: hence, $a_1(n)$ = $\cdots$ = $a_F(n)$ = $a_p(n)$ $\in$ {$\pm 1$, $\pm i$} for n = 1, ... , $N_p$. The standard specifies the symbol rate, namely, 1/T = 1760 MHz, and the (one-sided) effective bandwidth of the baseband signal in (*) is approximatively W = 1/(2T).

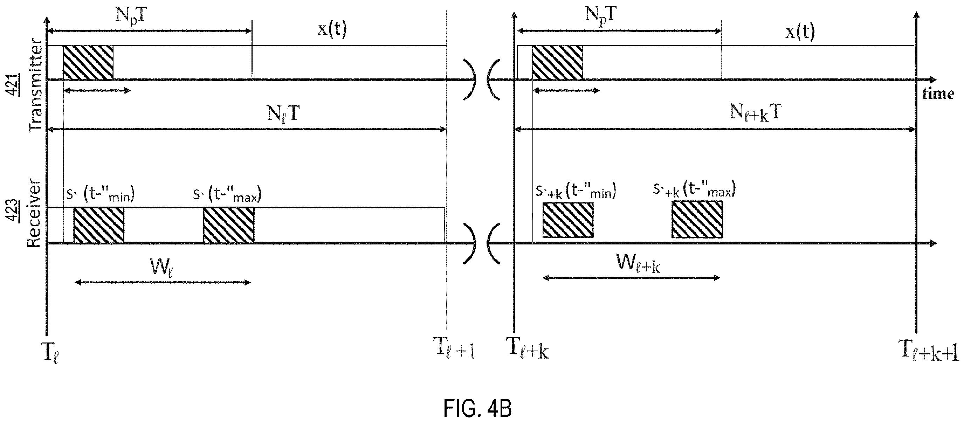

In the following, the positioning platform 111 assumes that the signal useful for sensing is the portion of x(t) falling in the time intervals $\mathcal{S}_\ell = [S_\ell^s, S_\ell^e) \equiv [N_\ell^s T, N_\ell^e T) \subseteq [T_\ell, T_\ell + N_p T]$, for $\ell$=1,..., F, as shown in FIG. 4B. FIG. 4B are diagrams illustrating a probing signal 421 from a transmitter and a back-scatter signal 423 received at an antenna deployment in a sequence of pulse repetition times (PRTs), according to one embodiment. The processing window $\mathcal{S} = \bigcup_{\ell=1}^{F} \mathcal{S}_\ell$ depends on a maximum Doppler shift, a minimum and a maximum delay of the echo signals. $s_\ell(t)$ denotes a portion of x(t) falling in $\mathcal{S}_\ell$:

$$s_\ell(t) = x(t)\Pi\left(\frac{t - S_\ell^s}{S_\ell^e - S_\ell^s}\right)$$

$$= \sqrt{\mathcal{P}T} \sum_{n=1}^{F'} a_\ell(n) g_{\text{tx}}\big(t - (n-1)T - T_\ell\big)\Pi\left(\frac{t - S_\ell^s}{S_\ell^e - S_\ell^s}\right)$$

i(t) denotes a portion of x(t) not contained in any $\mathcal{S}_\ell$ which is not considered for the sensing application:

$$i(t) = x(t)\left(1 - \sum_{\ell=1}^{F} \Pi\left(\frac{t - S_\ell^s}{S_\ell^e - S_\ell^s}\right)\right),$$

$$x(t) = \sum_{\ell=1}^{F} s_\ell(t) + i(t)$$
$$\underbrace{\phantom{\sum_{\ell=1}^{F} s_\ell(t)}}_{s(t)}$$

Within the set of frames processed by the MIMO radar receiver in order to estimate positioning parameters, the scanned target should not change its position (range, elevation and azimuth) or velocity. If that is the case, let $v_{max}$ and $\dot{v}_{max}$ be the maximum radial velocity and acceleration of the scanned target, and $\lambda_c = f_c/c$ is the wavelength at frequency $f_c$, then range and Doppler migration can be neglected if:

$$v_{max} T_F \ll \Delta_r = \frac{c}{2W}$$

$$\dot{v}_{max} T_F \ll \Delta_v = \frac{\lambda_c}{2T_F}$$

Assuming $\lambda_c$ is the carrier wavelength of 5 mm, the carrier value $\Delta_r$ ($\simeq$ 17 cm) and the bandwidth value $\Delta_v$ for a use case of interest would approximatively be the range and the range-rate resolution granted by the probing signal respectively. There is an inherent trade-off between the maximum radial velocity to be measured and the achievable range-rate resolution.

At the receiver side, in one embodiment, the MIMO radar receiver (co-located with the communication transmitter) is an uniform 2D antenna deployment in the $(\hat{\mathbf{x}}, \hat{\mathbf{y}})$ plane with $J_x$, $J_y$ identifying the number of elements along each of the two dimensions, and $d_x$ and $d_y$ the normalized spacing between $J_x$ elements the direction $\hat{\mathbf{x}}$, and the $J_y$ elements in the direction $\hat{\mathbf{y}}$, respectively. The prospective echo signals may be back-scattered from any target 105 present in the environment, including surface clutter, airborne or volume clutter, etc. In the following discussion, the positioning platform 111 assumes that each echo is generated by a distinct and point-like scatterer, to simplify the analysis.

In other embodiments, the positioning platform 111 considers prior knowledge of the environment of interest to associate adjacent detections to range-spread targets and/or removes ghosts generated by multi-path propagation.

Under the point-like scatterer scenario, the positioning platform 111 assumes no range/Doppler migration, and writes the back-scatter signal received at the j-th antenna of the MIMO radar receiver, positioned in coordinates $\lambda_c[x_j d_x, y_j d_y]$, with $x_j \in \{0,...,J_x-1\}$ and $y_j \in \{0,...,J_y-1\}$ as follows:

$$r_j(t) = \sum_{k=1}^{K} \alpha_{k,j}(\theta_k, \rho_k) e^{i2\pi\nu_k t} s(t - \tau_k) + i_{r,j}(t) + w_j(t)$$

where:

$K \in \{0,1,...,K_{max}\}$ is the unknown number of echoes generated by x(t), with $K_{max}$ being an upper bound to the number of prospective echoes;

$\tau_k \in [\tau_{min}, \tau_{max}]$ and $\nu_k \in [0, \nu_{max}]$ are delay and Doppler shift of the k-th echo generated by x(t), for k = 1,..., K, where $\nu_{max}$, $\tau_{min}$, and $\tau_{max}$ are the maximum Doppler shift, and the minimum and maximum delay of a prospective echo, respectively;

$\alpha_{k,j}(\theta_k,\rho_k) \in C$ is the attenuation of the k-th echo generated by x(t) for k = 1,..., K.

Specifically,

$$\alpha_{k,j}(\theta_k, \rho_k) = |\alpha_k| e^{-i2\pi(x_j f_k^x + y_j f_k^y)}$$

$$f_k^x = \mod(d_x sin(\theta_k) sin(\rho_k), 1),$$

$$f_k^y = \mod(d_y \cos(\theta_k), 1).$$

The channel coefficient amplitude $|\alpha_k|$ is a function of the two-way antenna gain, the two-way channel response, and the radar cross-section (RCS) of the scatterer causing the reflection. The channel coefficient amplitude can be considered not to be dependent on the antenna, given that all antennas of MIMO radar receiver have the same gain.

$i_{r,j}(t)$ accounts for the part of the F frames not used for the sensing and for the other echoes (if any) generated by the SCPHY packets that are transmitted during the other access periods of the DTI.

$$i_{r,j}(t) = \sum_{k=1}^{K} \alpha_{k,j}(\theta_k, \rho_k) e^{i2\pi\nu_k t} i(t - \tau_k) + \hat{i}(t)$$

In one embodiment, the positioning platform 111 employs, when the communication is idle, a form of alert detection by reserving some access periods of the DTI to send dummy SCPHY packets. This implies that

$\sum_{k=1}^{K} \alpha_{k,j}(\theta_k, \rho_k) e^{i2\pi\nu_k t} i(t - \tau_k) = 0$. The same approach is applicable in the presence of active communication links, as the consequent throughput loss remains under the control of the AP 113 and it could be dynamically adjusted based on the requested services. In another embodiment (a "two-step sequential detection"), the positioning platform 111 applies an alert-confirm detection after obtaining a rough map of the environment using an existing technique that detects only a single-target.

$w_j(t)$ is a circularly-symmetric complex Gaussian process, that is independent of the received echo signals, with an autocorrelation function. Gaussian processes are useful in the echo signal modelling, due to signal wave properties inherited from the normal distribution.

In the following discussion, the positioning platform 111 further assumes that the maximum delay

$\tau_{max} \leq T_\ell - S_\ell^e$, to ensure that any echo of the portion of the signal used for sensing terminates before the transmission of the next frame. In this case, the positioning platform 111 ignores a typical setting in radar applications that any echo arrives when the radar is the hearing mode. As illustrated in FIGs. 4A-4B, in the $\ell$-th frame $[T_\ell, T_{\ell+1}]$, the positioning platform 111 elaborates the portion of the backscattered signal received in the interval window:

$$\mathcal{W}_\ell = \left[ T_\ell + \tau_{\min}, T_\ell + S_\ell^e + \tau_{\max} \right] \subseteq [T_\ell, T_\ell + N_\ell T]$$

For $\ell = 1, \ldots, F$. The positioning platform 111 chooses the processing window $\mathcal{W} = \bigcup_{\ell=1}^{F} \mathcal{W}_\ell$ based on different design considerations. By way of example, in FIGs. 4A-4B, the positioning platform 111 sets the processing window as within the preamble duration. $T_c$ is the sampling rate, and M is the largest integer such that $MT_c$ is smaller or equal to the length of $S_\ell$. In the following discussion, the positioning platform 111 chooses the length of the interval window $\mathcal{W}_\ell$, say $L(\mathcal{W}_\ell)$ such that $MT_c = L(\mathcal{W}_\ell)$ with M under the designer's control. Also, consider the Fourier orthonormal basis spanning the space of complex- valued square-integrable functions on the interval $S_\ell$, namely:

$$\phi_{m,\ell}(t) = \frac{1}{\sqrt{MT_c}} e^{i2\pi \frac{m}{MT_c} t} \chi_\ell(t), \quad m = 0, \pm 1, \pm 2, \ldots$$

$$\chi_\ell(t) = \begin{cases} 1, & t \in \mathcal{W}_\ell \\ 0, & t \notin \mathcal{W}_\ell \end{cases}.$$

In one embodiment, in step 303 of the process 300, the positioning platform 111, such as the data collection module 201, cause, at least in part, a projection of the one or more measurements into a super-resolution space.

By way of example, the positioning platform 111 projects $r_j(t)$ onto $\phi_{m,\ell}(t)$, and obtains the following samples:

$$y_{j,m,\ell} = \int_{\mathcal{W}_\ell} r_j(t)\phi^*_{m,\ell}(t)dt$$

$$= \sqrt{\mathcal{P}T}\sum_{k=1}^{K}\alpha_{k,j}(\theta_k,\rho_k)\sum_{n=N_\ell^s}^{N_\ell^e-1}a_\ell(n)$$

$$\times \int_{\mathcal{W}_\ell}g_{\text{tx}}\left(t-\tau_k-nT-T_\ell\right)e^{-\mathrm{i}2\pi\left(\frac{m}{MT_c}-\nu_k\right)t}dt$$

$$+ \underbrace{\frac{1}{\sqrt{MT_c}}\int_{\mathcal{W}_\ell}(i_{r,j}(t)+w_j(t))e^{-\mathrm{i}2\pi\frac{m}{MT_c}t}dt}_{\tilde{w}_{j,m,\ell}}$$

$$= \sqrt{\mathcal{P}T}\sum_{k=1}^{K}\alpha_{k,j}(\theta_k,\rho_k)\sum_{n=N_\ell^s}^{N_\ell^e-1}a_\ell(n)$$

$$\times \overline{g}_{\text{tx}}\left(\frac{m}{MT_c}-\nu_k\right)e^{-\mathrm{i}2\pi\left(\frac{m}{MT_c}-\nu_k\right)(\tau_k+nT_c+T_\ell)} + \tilde{w}_{j,m,\ell}$$

Where $\overline{g}_{\text{tx}}(\cdot)$ is the Fourier Transform of $g_{\text{tx}}(t)$. As a typical system parameter, the positioning platform 111 sets $2\pi v_k N_\ell^e T_c \ll 1$, which implies that $v_k << B$, from which it also follows

$$\overline{g}_{\text{tx}}\left(\frac{m}{MT_c}-f_k\right) \simeq \overline{g}_{\text{tx}}\left(\frac{m}{MT_c}\right)$$
$$e^{2\pi\mathrm{i}v_k T_c n} \simeq 1, \quad n = N_\ell^s, \ldots, N_\ell^e-1.$$

Therefore

$$y_{j,m,\ell} =$$

$$\sqrt{\mathcal{PT}}\,\overline{g}_{\mathrm{tx}}\left(\frac{m}{MT_c}\right)\overbrace{\left(\overbrace{\sum_{n=N_\ell^s}^{N_\ell^e-1}a_\ell(n)e^{-\mathrm{i}2\pi\frac{m}{M}n}}^{c_{m,\ell}}\right)\overbrace{e^{-\mathrm{i}2\pi\frac{m\ell N}{M}}}^{d_{m,\ell}}}^{g_{m,\ell}}$$

$$\times\sum_{k=1}^{K}\alpha_{k,j}(\theta_k,\rho_k)e^{-\mathrm{i}2\pi\mathrm{f}_k^\tau m}e^{\mathrm{i}2\pi\mathrm{f}_k^\nu\ell}+\tilde{w}_{j,m,\ell}$$

$$=\sqrt{\mathcal{PT}}\,g_{m,\ell}\sum_{k=1}^{K}|\alpha_k|e^{-\mathrm{i}2\pi(x_j\mathrm{f}_k^x+y_j\mathrm{f}_k^y)}e^{-\mathrm{i}2\pi\mathrm{f}_k^\tau m}e^{\mathrm{i}2\pi\mathrm{f}_k^\nu\ell}$$

$$+\tilde{w}_{j,m,\ell}$$

Where the positioning platform 111 absorbs the term $e^{\mathrm{i}2\pi\nu_k\tau_k}$ into $\alpha_k$, the positioning platform 111 defines:

$$\mathrm{f}_k^\tau=\frac{\tau_k}{MT_c}$$

$$\mathrm{f}_k^\nu=\nu_kT.$$

After collecting the samples in the processing window $W_j$, the positioning platform 111 sets $\mathbf{y}_{j,m}=(y_{j,m,0},...,y_{j,m,F-1})^{\mathsf{T}}\in\mathbb{C}^F$, for m = 0,...,M -1, and $\mathbf{y}_j=(\mathbf{y}_{j,0},...,\mathbf{y}_{j,M-1})\mathsf{T}\in\mathbb{C}^{FM}$. Then the positioning platform 111 determines

$$\mathbf{y}_j=\sqrt{\mathcal{PT}}\sum_{k=1}^{K}\alpha_{k,j}(\theta_k,\rho_k)\left(\mathbf{e}_\tau(\mathrm{f}_k^\tau)\otimes\mathbf{e}_\nu(\mathrm{f}_k^\nu)\right)\odot\mathbf{g}+\tilde{\mathbf{w}}_j$$

where $\mathbf{g}\in\mathbb{C}^{FM}$ and $\tilde{\mathbf{w}}_j\in\mathbb{C}^{FM}$ are defined, similarly to $\mathbf{y}_j$, piling up the correspondent discrete signal vectors, while $\mathbf{e}_\nu(\mathrm{f}^\nu_k)\in\mathbb{C}^F$ are Doppler steering vectors and $\mathbf{e}_\tau(\mathrm{f}^\tau_k)\in\mathbb{C}^M$ are the delay steering vectors, respectively defined as

$$\mathbf{e}_\nu(\mathrm{f}_k^\nu)=\left(1,e^{\mathrm{i}2\pi\mathrm{f}_k^\nu},\ldots,e^{\mathrm{i}2\pi\mathrm{f}_k^\nu(F-1)}\right)^{\top}$$

$$\mathbf{e}_\tau(\mathrm{f}_k^\tau)=\left(1,e^{\mathrm{i}2\pi\mathrm{f}_k^\tau},\ldots,e^{\mathrm{i}2\pi\mathrm{f}_k^\tau(M-1)}\right)^{\top}.$$

Furthermore, setting y = $(y_1,...,y_{J_xJ_y})^{\mathsf{T}}\in\mathbb{C}^L$, with L = $J_x\times J_y\times M\times F$, the positioning platform 111 determines

$$\mathbf{y}=\mathbf{G}\sum_{k=1}^{K}|\alpha_k|\underbrace{\mathbf{e}_x(f_k^x)\otimes\mathbf{e}_y(\mathrm{f}_k^y)\otimes\left(\mathbf{e}_\tau(\mathrm{f}_k^\tau)\otimes\mathbf{e}_\nu(\mathrm{f}_k^\nu)\right)}_{\mathbf{e}(\mathrm{f}_k^x,\mathrm{f}_k^y,\mathrm{f}_k^\tau,f_k^\nu)}+\tilde{\mathbf{w}}$$

$$=\mathbf{G}\mathbf{E}_L(\mathbf{f}_{1:K})\,\boldsymbol{\alpha}+\tilde{\mathbf{w}}$$

Where

$$\mathbf{e}_x\left(\mathbf{f}_k^x\right) = \left[1, e^{-\mathrm{i}2\pi\mathbf{f}_k^x}, e^{-\mathrm{i}2\pi 2\mathbf{f}_k^x}, \ldots, e^{-\mathrm{i}2\pi(J_x-1)\mathbf{f}_k^x}\right]^T$$

$$\mathbf{e}_y\left(\mathbf{f}_k^y\right) = \left[1, e^{-\mathrm{i}2\pi\mathbf{f}_k^y}, e^{-\mathrm{i}2\pi 2\mathbf{f}_k^y}, \ldots, e^{-\mathrm{i}2\pi(J_y-1)\mathbf{f}_k^y}\right]^T$$

$$\mathbf{G} = \sqrt{\mathcal{P}T}\mathbf{I}_F \otimes \mathbf{g}$$

with $\mathbf{I}_F$ is the $J_x J_y \times J_x J_y$ identity matrix.

Referring back to FIG. 3, in step 305 of the process 300, the positioning platform 111, such as the optimization module 203, processes, using an atomic norm optimization, the structured vectors generated from the signal measurements to separate a plurality of echo signals in the back-scatter signal data 103. The atomic norm optimization outputs the separated plurality of echo signals as a matrix comprising a plurality of dimensions respectively representing the one or more signal parameters (e.g., hidden parameters to be estimated).

In one embodiment, the one or more signal parameters relate to a three-dimensional position, a velocity (e.g., based on a Doppler shift), or a combination thereof of the plurality of echo signals. By way of example, the three-dimensional position is represented based, at least in part, on a range parameter, an azimuth parameter, and an elevation parameter.

Referring back to the two-dimensional antenna deployment example, the positioning platform 111 outputs a matrix representing the plurality of echo signals across four dimensions including an x-axis dimension, a y-axis dimension, a range dimension, and/or a Doppler dimension. By way of example, the matrix is positive semidefinite multi-level Toeplitz matrix.

Referring back to the three-dimensional antenna deployment example, the positioning platform 111 outputs matrix representing the plurality of echo signals across five dimensions including an x-axis dimension, a y-axis dimension, a z-axis dimension, a range dimension, and/or a Doppler dimension.

As mentioned, FIG. 5 shows a flowchart with mathematical formula corresponding to FIG. 3. In stage 501, the positioning platform 111 identifies from the discrete received vector $\mathbf{y} \in \mathbb{C}^L$, with $L = J_x \times J_y \times M \times F$, the set of frequencies, $\mathbf{f}_{1:K} = \{\mathbf{f}_1, \mathbf{f}_2, \ldots, \mathbf{f}_K\}$, with $\mathbf{f}_k = [\mathbf{f}_k^x, \mathbf{f}_k^y, \mathbf{f}_k^\tau, \mathbf{f}_k^v]^T \in \mathbb{T}^4$, that characterizes the directions of arrival, Doppler shift, and range. The positioning platform 111 solves an optimization problem (P2) in Stage 503.

The optimization problem (P2) can be written using atomic norm optimization as:

$$\inf_{x,\mathbf{x}\in\mathbb{C}^L,\mathbf{T}\in\mathcal{T}_\mathbf{N}} \|\mathbf{y} - \mathbf{Gx}\|_2^2 + \eta\left(x + \mathrm{Tr}\left\{\mathbf{T}\right\}\right)$$

$$\text{s.t.} \quad \begin{bmatrix} \mathbf{T} & \mathbf{x} \\ \mathbf{x}^\dagger & x \end{bmatrix} \succeq 0$$

where

$$\mathbf{T} \in \mathcal{T}_\mathbf{N}$$

is a positive semidefinite (PSD) d-Level Toeplitz (d-LT) matrix with $d = 4$ and $N = [J_x, J_y, M, F]$ as given in Definition 1 discussed below.

Referring back to FIG. 3, in step 307 of the process 300, the positioning platform 111, such as the decomposition module 205, cause, at least in part, a decomposition of the matrix to extract a plurality of frequencies indicating respective values of the one or more signal parameters for the plurality of echo signals.

Referring back to the two-dimensional antenna deployment example, the positioning platform 111 decomposes the matrix representing the plurality of echo signals across four dimensions including a spatial x dimension, a spatial y dimension, a range dimension, and/or a Doppler dimension, and extracts frequencies indicating respective values of an azimuth parameter, an elevation parameter, a delay parameter, and a Doppler shift parameter for the respective echo signal.

Referring back to the three-dimensional antenna deployment example, the positioning platform 111 decomposes the matrix representing the plurality of echo signals across five dimensions including a spatial x dimension, a spatial y dimension, a spatial z dimension, a range dimension, and/or a Doppler dimension and extracts frequencies indicating respective values of an azimuth parameter, an elevation parameter, a delay parameter, and a Doppler shift parameter for the respective echo signal.

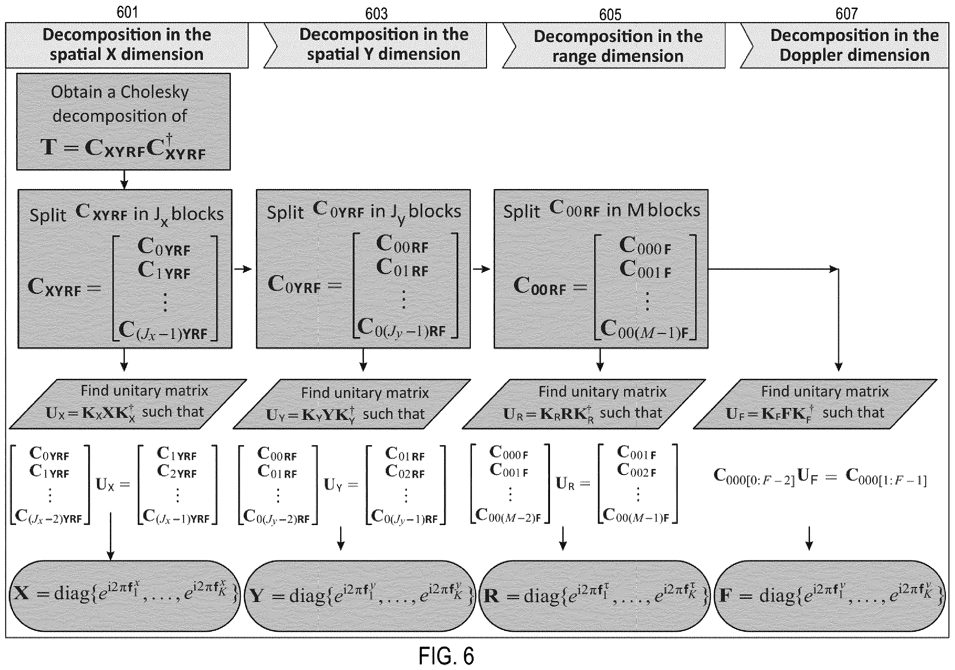

In one embodiment, the positioning platform 111 starts by applying a Cholesky decomposition (or equivalent decomposition). The positioning platform 111 can then apply the multi-dimensional Vandermonde decomposition (or equivalent decomposition) as described with respect to the example of FIG. 6 below.

FIG. 6 is a diagram illustrating a sample matrix decomposition process, according to one embodiment. In this embodiment, to extract the frequency parameters f1:K = {f1,f2,...,fK}, with fk = [fxk,fyk,fτk,fvk]T ∈T4, from yE CL, with L = Jx × Jy × M × F, the positioning platform 111 derives the Vandermonde decomposition of a matrix $T \in \mathcal{T}_N$ obtained as the solution of (P2) using Algorithm 1, and applies equations on each of the echo signals recover the angle of arrival in azimuth and elevation, and a delay of echo k, in Stage 505.

The positioning platform 111 applies the following equations on each of the echo signals to recover from (fˣ$_k$, fʸ$_k$) the angle of arrival in azimuth and elevation ($\theta_k$, $\rho_k$) of echo k.

$$f_k^x = \mod\left(d_x \sin(\theta_k)\sin(\rho_k), 1\right),$$

$$f_k^y = \mod\left(d_y \cos(\theta_k), 1\right).$$

The positioning platform 111 applies the following equations on each of the echo signals to recover from fτ$_k$ the delay $\tau_k$, and to recover from fv$_k$ the Doppler shift $\nu_k$ of echo k.

$$f_k^\tau = \frac{\tau_k}{MT_c}$$

$$f_k^\nu = \nu_k T$$

Regarding Definition 1, let d = 4. A L × N matrix **T** is a positive semidefinite (PSD) d-Level Toeplitz (d-LT) matrix belonging to the set

$$\mathcal{T}_N \subseteq C^{L \times L}$$

if it is a block Hermitian Toeplitz matrix defined as **T** = **T$_{XYRF}$**, with L = J$_x$ × J$_y$ × M × F, where

$$\mathbf{T_{XYRF}} = \begin{bmatrix} \mathbf{T}_{0\mathbf{YRF}} & \mathbf{T}_{1\mathbf{YRF}} & \cdots \mathbf{T}_{(J_x-1)\mathbf{YRF}} \\ \mathbf{T}_{(-1)\mathbf{YRF}} & \mathbf{T}_{0\mathbf{YRF}} & \cdots \mathbf{T}_{(J_x-2)\mathbf{YRF}} \\ \vdots & & \vdots \\ \mathbf{T}_{(-J_x+1)\mathbf{YRF}} \mathbf{T}_{(-J_x+2)\mathbf{YRF}} \cdots & \mathbf{T}_{0\mathbf{YRF}} \end{bmatrix},$$

where is a block Hermitian Toeplitz matrix T$_{aYRF}$ = T†$_{-aYRF}$ and the generic block T$_{aYRF}$ with -J$_x$ + 1 ≤ a ≤ J$_x$ - 1 is defined recursively as follows:

$$
\mathbf{T}_{a\mathbf{YRF}} = \begin{bmatrix} \mathbf{T}_{a0\mathbf{RF}} & \mathbf{T}_{a1\mathbf{RF}} & \dots \mathbf{T}_{a(J_y-1)\mathbf{RF}} \\ \mathbf{V}_{a(-1)\mathbf{RF}} & \mathbf{T}_{a0\mathbf{RF}} & \dots \mathbf{T}_{a(J_y-2)\mathbf{RF}} \\ \vdots & & \vdots \\ \mathbf{T}_{a(-J_y+1)\mathbf{RF}} & \mathbf{T}_{a(-J_y+2)\mathbf{RF}} \dots & \mathbf{T}_{a0\mathbf{RF}} \end{bmatrix},
$$

where a block Hermitian Toeplitz matrix $\mathbf{T}_{ab\mathbf{RF}} = \mathbf{T}^{\dagger}_{-a-b\mathbf{RF}}$ and a generic block $\mathbf{T}_{ab\mathbf{RF}}$ with $-J_x + 1 = a = J_x - 1$ and $-J_y + 1 = b = J_y - 1$ is defined recursively as follows

$$
\mathbf{T}_{ab\mathbf{RF}} = \begin{bmatrix} \mathbf{T}_{ab0\mathbf{F}} & \mathbf{T}_{ab1\mathbf{F}} & \dots \mathbf{T}_{ab(M-1)\mathbf{F}} \\ \mathbf{V}_{ab(-1)\mathbf{F}} & \mathbf{T}_{ab0\mathbf{F}} & \dots \mathbf{T}_{ab(M-2)\mathbf{F}} \\ \vdots & & \vdots \\ \mathbf{T}_{ab(-M+1)\mathbf{F}} & \mathbf{T}_{ab(-M+2)\mathbf{F}} \dots & \mathbf{T}_{ab0\mathbf{F}} \end{bmatrix},
$$

with $\mathbf{T}_{abc\mathbf{F}} = \mathbf{T}^{\dagger}_{-a-b-c\mathbf{F}}$ and the generic block $\mathbf{T}_{abc\mathbf{F}}$ with $-J_x + 1 \le a \le J_x - 1$, $-J_y + 1 \le b \le J_y - 1$ and $-M + 1 \le c \le M - 1$ is defined from vector $t = [t_n] = [v_{abcd}] \in C^{(2J_x+1)(2J_y+1)(2M+1)(2F+1)}$ with $\overline{n} = [a, b, c, d]$, $v_{abcd} = v^{\dagger}_{-a-b-c-d}$ and $-F+1 \le d \le F-1$, as:

$$
\mathbf{T}_{abc\mathbf{F}} = \begin{bmatrix} t_{abc0} & t_{abc1} & \dots t_{abc(F-1)} \\ t_{abc(-1)} & t_{abc0} & \dots t_{abc(F-2)} \\ \vdots & & \vdots \\ t_{abc(-F+1)} & t_{abc(-F+2)} \dots & t_{abc0} \end{bmatrix}
$$

The block Hermitian matrix TXYRF is constructed following a specific nesting of each block dimension Jx ← Jy ← M ← F 601-607 and the resulting d-LT matrix will be sensitive to an applied ordering, such as canonical ordering applied here.

In one embodiment, the positioning platform 111,e.g., via the output module 207, outputs the plurality of frequencies indicating respective values of the one or more signal parameters for the plurality of echo signals, for further processing. The further processing may be performed by the positioning platform 111 and/or an external platform via machine learning (ML) and artificial intelligence (AI) thereby generating an action model that maps actions to be taken with the one or more signal parameters associated with the target. The actions can be taken by the positioning platform 111, the external platform, and/or one or more third parties (e.g., entities, systems, etc.).

In another embodiment, the positioning platform 111 provides the respective values of the one or more signal parameters to create a three-dimensional map of the plurality of echo signals, and causes at least in part, a presentation of a user interface depicting a representation of the three-dimensional map. By way of example, the positioning platform 111 periodically reports positions and/or velocities of a list of target/echoes 105 to a reference station, such as the AP 113, so as to create and maintain a global map of the environment where the targets/echoes 109 present.

In other embodiments, the positions and/or velocities of target/echoes 105 can be processed via ML and AI to generate insight data of the targets, such as user activities (e.g., book reading, cooking, exercising, fainting, etc.), object monitoring (e.g., pet playing), IoT device operations (e.g., robot cleaning, failure or outage, etc.), etc. The positioning platform 111 then periodically or occasionally reports the insight data of the targets to one or more designated recipients (e.g., private and/or public entities/systems), so as to alter the recipients to take actions. The insight data may be occasionally reported based on certain triggers, e.g., reaching one or more position and/or velocity thresholds, etc. By way of examples, the positioning platform 111 reports a sudden fall of a patient in a hospital room to a nurse on-duty, a house break-in to a police department, a robot failure to the owner, etc.

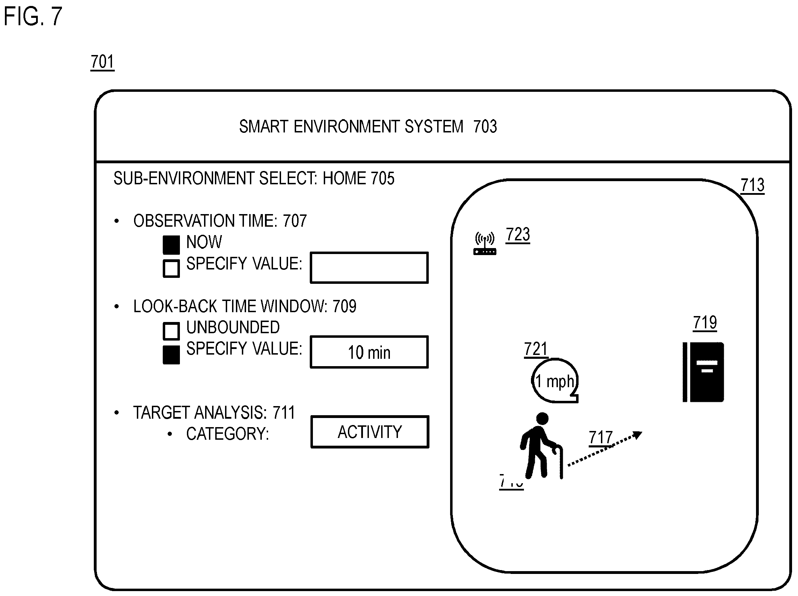

FIG. 7 is a diagram of a user interface 701 for presenting target positions and other relevant data, according to one embodiment. In the example of FIG. 7, the positioning platform 111 presents the user interface 701 of a smart environment system 703 after the further processing subsequent to the flowchart in FIG. 3. As shown, the user interface 701 provides the sub-environment 705 selected as "home", user interface elements for specifying target position presentation constraints for an observation time 707 selected as "now", and a look-back time window 709, an analysis category 711 as "activity". The user has an option to keep the time as "now" or to specify a constraint value. In this example, the user has specified the look-back time window as "10 minutes". For instance, the user selects at least 10 minutes between the observation and the look-back time of the representation 713 of the target locations and/or speed as determined in a continuous manner.

In FIG. 7, the representation 713 shows a person 715 walking with a stick in a direction 717 towards a refrigerator 719 in their respective positions in the home. In one instance, when a selecting mechanism (e.g., a user finger) hovering over a target on the user interface 701, such as the person 715, a popup 721 shows a walking pace of "1 mph". The representation 713 also shows an assess point 739, which may be embedded/incorporated with the antenna deployment 101 and/or the positioning platform 111. The user interface 701 may be presented on one or more on site IoT devices, other IoT devices (offsite, such as the designated recipients), the services platform 117, and/or the content provider 121a-121u, etc.

The targets in the representation 711 can be presented as avatars, actual target images, deep fakes, etc. that are generated/simulated by the positioning platform 111, the external platform, and/or one or more third parties (e.g., entities, systems, etc.), using machine learning, artificial intelligence, etc. The user can select among analysis categories, such as target current activity (e.g., weightlifting), target interaction (e.g., changing diaper), target future activity (e.g., cleaning the mob and emptying the bucket), target activity recommendation, etc. In one embodiment, such analysis is based on the target position and/or velocity data output by the output module 207. In another embodiment, the analysis further incorporates target profile and/or context data for the analysis.

In one embodiment, when the target is a user, the target profile data includes, but not limited to, the name, name, login named, screen named, nicknamed, handle names, home addresses, email addresses, government identification numbers, face, fingerprints, handwriting, credit card numbers, digital identities, date of birth, age, birthplace, genetic information (e.g., gender, race, etc.), telephone numbers, marriage status/records, criminal records, purchase records, financial data, activity records, employment records, insurance records, medical records, political and non-political affiliations, preferences (e.g., POIs), calendar data, driving history data, vehicle sharing data, etc. of the driver/requesting user. When the target is an IoT device, the target profile data includes, but not limited to, a model, a brand name, identification numbers, specification, etc.

In one embodiment, the target context data includes, but not limited to, indoor environment context data (e.g., room temperature), outdoor environment context data (e.g., weather), etc.

The above-described embodiments allow grid-less high precision estimation of four relevant parameters for positioning, localization awareness and tracking, exploiting both spatial resolution provided by multiple antennas at the receiver side together with the high resolution in range and movement speed provided by the bandwidth available at mmWave. For each target, the proposed method allows a 3D positioning providing the range, azimuth and elevation coordinates of where the target is, together with the Doppler shift, that enables movement tracking of the aforementioned targets.

The processes described herein for providing super-resolution target estimation via atomic norm optimization may be advantageously implemented via circuitry, software, hardware (e.g., general processor, Digital Signal Processing (DSP) chip, an Application Specific Integrated Circuit (ASIC), Field Programmable Gate Arrays (FPGAs), etc.), firmware or a combination thereof. As used in this application, the term "circuitry" may refer to one or more or all of the following:

   (a) hardware-only circuit implementations (such as implementations in only analog and/or digital circuitry) and

   (b) combinations of hardware circuits and software, such as (as applicable):

      (i) a combination of analog and/or digital hardware circuit(s) with software/firmware and
      (ii) any portions of hardware processor(s) with software (including digital signal processor(s)), software, and memory(ies) that work together to cause an apparatus, such as a mobile phone or server, to perform various functions), and

   (c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. Such exemplary hardware for performing the described functions is detailed below.

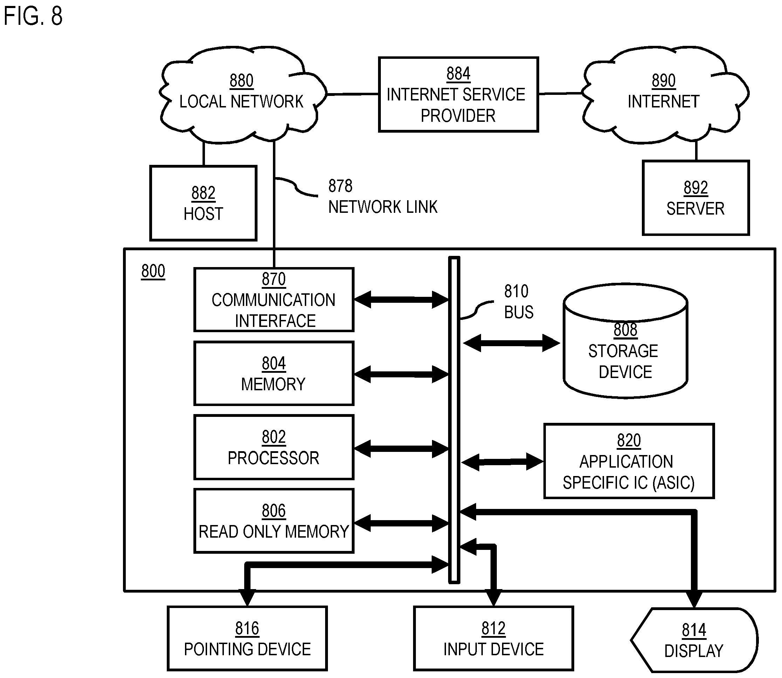

As discussed above, example embodiments described herein may also be implemented in software (e.g., executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate, or transport the instructions for use by or in connection with an instruction execution system, apparatus, or device, such as a computer, with one example of a computer described and depicted, e.g., in FIG. 8 below. A computer-readable medium may comprise a computer-readable storage medium (e.g., memories or other devices illustrated in FIG. 8) that may be any media or means that can contain, store, and/or transport the instructions for use by or in connection with an instruction execution system, apparatus, or device, such as a computer. In one example embodiment, a computer-readable storage medium is non-transitory and does not comprise propagating signals.

As such, one example embodiment comprises a non-transitory computer readable medium comprising program instructions for causing an apparatus to perform at least any of the methods of the various embodiments described herein. Another example embodiment comprises a computer program comprising instructions for causing an apparatus to perform at least any of the methods of the various embodiments described herein. Another example embodiment comprises a computer readable medium comprising program instructions for causing an apparatus to perform at least any of the methods of the various embodiments described herein. Yet another example embodiment comprises a non-transitory computer readable storage medium comprising program instructions for causing an apparatus to perform at least any of the methods of the various embodiments described herein.

FIG. 8 illustrates a computer system 800, such as the computer system 80, upon which an example embodiment of the invention may be implemented. Computer system 800 is programmed (e.g., via computer program code or instructions) to provide super-resolution target estimation via atomic norm optimization as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to providing super-resolution target estimation via atomic norm optimization. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or other dynamic storage device, stores information including processor instructions for providing super-resolution target estimation via atomic norm optimization. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing super-resolution target estimation via atomic norm optimization, is provided to the bus 810 for use by the processor from an external input device 832, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 834, such as a cathode ray tube (CRT) or a liquid crystal display (LCD), or plasma screen or printer for presenting text or images, and a pointing device 836, such as a mouse or a trackball or cursor direction keys, or motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 832, display device 834 and pointing device 836 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of application specific ICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 113 for providing super-resolution target estimation via atomic norm optimization.

The term computer-readable medium is used herein to refer to any medium that participates in providing information to processor 802, including instructions (e.g., computer program instructions) for execution. For example, the instructions can cause an apparatus (e.g., processor, computer, device, etc.) to perform one or more steps, functions, operations, etc. specified in the instructions or computer program instructions. According, a computer program may comprise instructions for causing an apparatus to perform at least any of the steps, functions, operations, etc. specified in the instructions. Similarly, a computer-readable medium (e.g., transitory or non-transitory) may comprise instructions (e.g., program instructions, computer program instructions, or equivalent) for causing an apparatus to perform any of the specified steps, functions, operations, etc. Such a medium may take many forms, including, but not limited to, non-volatile or non-transitory media, volatile or transitory media and transmission media. Non-volatile media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system can be deployed in various configurations within other computer systems, e.g., host 882 and server 892.

FIG. 9 illustrates a chip set 900 upon which an example embodiment of the invention may be implemented. Chip set 900 is programmed to provide super-resolution target estimation via atomic norm optimization as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide super-resolution target estimation via atomic norm optimization. The memory 905 also stores the data associated with or generated by the execution of the inventive steps.

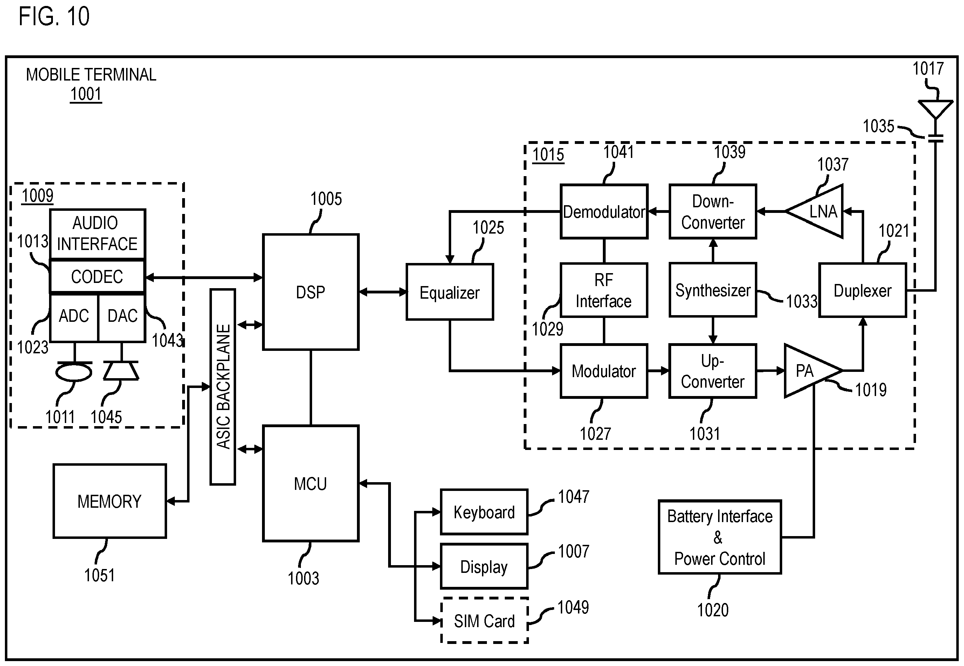

FIG. 10 is a diagram of exemplary components, for example, of the IoT device, any sensor device, positioning platform 111, vehicle electronic control unit (ECU), or mobile terminal (e.g., handset), or any combination thereof, capable of operating in the system of FIG. 1A, according to one example embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile station functions that offer automatic contact matching. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile station 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003-which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile station 1001 to provide super-resolution target estimation via atomic norm optimization. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the station. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile station 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1051 may be, but not limited to, a single memory, CD, DVD, ROM, RAM, EEPROM, optical storage, or any other non-volatile or non-transitory storage medium capable of storing digital data.

An optionally incorporated SIM card 1049 carries, for instance, important information, such as the cellular phone number, the carrier supplying service, subscription details, and security information. The SIM card 1049 serves primarily to identify the mobile station 1001 on a radio network. The card 1049 also contains a memory for storing a personal telephone number registry, text messages, and user specific mobile station settings.

While the invention has been described in connection with a number of example embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

**Claims**

1.  An apparatus comprising:

    means for causing, at least in part, a collection of one or more measurements of back-scatter signal data from an antenna deployment;

means for processing the one or more measurements to obtain at least one structured vector, wherein the at least one structured vector has a structure that includes, at least in part, one or more signal parameters;

means for processing, using an atomic norm optimization, the at least one structured vector to separate a plurality of echo signals in the back-scatter signal data, wherein the atomic norm optimization outputs the separated plurality of echo signals as a matrix comprising a plurality of dimensions respectively representing the one or more signal parameters; and

means for causing, at least in part, a decomposition of the matrix to extract a plurality of frequencies indicating respective values of the one or more signal parameters for the plurality of echo signals.

2. The apparatus of claim 1, further comprising:

means for causing, at least in part, a projection of the one or more measurements into a super-resolution space, wherein the one or more signal parameters are determined with respect to the super-resolution space.

3. The apparatus of any one of the preceding claims, wherein the one or more signal parameters relate to a three-dimensional position, a velocity, or a combination thereof of the plurality of echo signals.

4. The apparatus of claim 3, wherein the three-dimensional position is represented based, at least in part, on a range parameter, an azimuth parameter, and an elevation parameter.

5. The apparatus of any one of the preceding claims, wherein the one or more measurements include, at least in part, a correspondent discrete signal vector, a Doppler steering vector, a delay steering vector, or a combination thereof.

6. The apparatus of any one of the preceding claims, wherein the matrix is positive semidefinite multi-level Toeplitz matrix.

7. The apparatus of any one of the preceding claims, wherein the decomposition of the matrix is a Vandermonde decomposition, a Cholesky decomposition, or a combination thereof.

8. The apparatus of any one of the preceding claims, wherein the collection of the one or more measurements is performed during a processing window, and wherein a duration of the processing window is based on a time to a transmission to a next signal.

9. The apparatus of any one of the preceding claims, wherein the back-scatter signal data is collected using an opportunistic sensing.

10. The apparatus of claim 9, wherein the opportunistic sensing is based, at least in part, on a transmission of a sensing signal including, at least in part, a control physical, CPHY, packet, a single-carrier physical, SCPHY, packet, or a combination thereof; and wherein the plurality of echo signals include one or more echoes of the CPHY packet, the SCPHY packet, or a combination thereof.

11. The apparatus of claim 10, wherein the back-scatter signal data is collected over a processing window, and wherein a window duration of the processing window is determined based on a transmission duration of a preamble including, at least in part, the CPHY packet, the SCPHY packet, or a combination thereof.

12. The apparatus of any one of the preceding claims, further comprising:
means for providing the respective values of the one or more signal parameters to create a three-dimensional map of the plurality of echo signals.

13. The apparatus of claim 12, further comprising:
means for causing, at least in part, a presentation of a user interface depicting a representation of the three-dimensional map.

14. The apparatus of any one of the preceding claims, wherein the antenna deployment is a multiple employment arranged in a two-dimensional array, a three-dimensional array, or a combination thereof.

15. A method comprising:

causing, at least in part, a collection of one or more measurements of back-scatter signal data from an antenna deployment;

processing the one or more measurements to obtain at least one structured vector, wherein the at least one structured vector has a structure that includes, at least in part, one or more signal parameters;

processing, using an atomic norm optimization, the at least one structured vector to separate a plurality of echo signals in the back-scatter signal data, wherein the atomic norm optimization outputs the separated plurality of echo signals as a matrix comprising a plurality of dimensions respectively representing the one or more signal parameters; and

causing, at least in part, a decomposition of the matrix to extract a plurality of frequencies indicating respective values of the one or more signal parameters for the plurality of echo signals.

16. The method of claim 15, further comprising:

causing, at least in part, a projection of the one or more measurements into a super-resolution space, wherein the one or more signal parameters are determined with respect to the super-resolution space.

17. A computer program comprising instructions which, when the program is executed by a computer, cause the computer to carry out at least the following:

causing, at least in part, a collection of one or more measurements of back-scatter signal data from an antenna deployment;

processing the one or more measurements to obtain at least one structured vector, wherein the at least one structured vector has a structure that includes, at least in part, one or more signal parameters;

processing, using an atomic norm optimization, the at least one structured vector to separate a plurality of echo signals in the back-scatter signal data, wherein the atomic norm optimization outputs the separated plurality of echo signals as a matrix comprising a plurality of dimensions respectively representing the one or more signal parameters; and

causing, at least in part, a decomposition of the matrix to extract a plurality of frequencies indicating respective values of the one or more signal parameters for the plurality of echo signals.

FIG. 1A

TRANSMISSION SIGNAL 107

BACK-SCATTER SIGNAL DATA 103

100

ACCESS POINT 113 (OR DEDICATED RADAR)

TRANSMITTER 109

ANTENNA DEPLOYMENT 101

TARGET/ECHO 105a

TARGET/ECHO 105n

POSITIONING PLATFORM 111

COMMUNICATIONS NETWORK 115

SERVICES PLATFORM 117

SERVICE 119a

SERVICE 119j

CONTENT PROVIDER 121a

CONTENT PROVIDER 121u

EP 3 933 432 A1

FIG. 1B

ANTENNA DEPLOYMENT 101

2D MULTI-ANTENNA ARRAY 131

ANT. 141a   ···   ANT. 141b

ANT. 141c   ···   ANT. 141m

OR

3D MULTI-ANTENNA ARRAY 133

ANT. 141a   ···   ANT. 141b

ANT. 141c   ···   ANT. 141m

ANT. 141a   ···   ANT. 141b

ANT. 141c   ···   ANT. 141m

FIG. 2

## POSITIONING PLATFORM 105

| DATA COLLECTION MODULE 201 | OPTIMIZATION MODULE 203 |
|---|---|
| DECOMPOSITION MODULE 205 | OUTPUT MODULE 207 |

## FIG. 3

300

EP 3 933 432 A1

```
301 ── COLLECT MEASUREMENTS OF BACK-SCATTER
         SIGNAL DATA FROM AN ANTENNA
         DEPLOYMENT
                        │
                        ▼
303 ── OPTIONALLY PROJECT THE MEASUREMENTS
         INTO A SUPER RESOLUTION SPACE
                        │
                        ▼
         PROCESS MEASUREMENTS INTO A
         STRUCTURED VECTOR WITH HIDDEN SIGNAL
         PARAMETER; AND PROCESS THE
         STRUCTURED VECTOR USING ATOMIC NORM
305 ──   OPTIMIZATION TO OUTPUT A MATRIX
         REPRESENTING THE SIGNAL PARAMETERS
                        │
                        ▼
         DECOMPOSE THE MATRIX TO EXTRACT
         FREQUENCIES OF THE SIGNAL PARAMETERS
307 ──   FOR THE ECHO SIGNALS
```

FIG. 4A

EP 3 933 432 A1

FIG. 4B

EP 3 933 432 A1

**Measurement collection** (501)

Collect from the MIMO radar receiver the measurement vector $\mathbf{y}$

$$\mathbf{y} = \mathbf{G}\mathbf{E}_L(\mathbf{f}_{1:K})\alpha + \tilde{\mathbf{w}}$$ INPUT FROM MEASUREMENT

**Atomic Norm optimization** (503)

Solve the optimization problem based on Atomic Norm

$$\inf_{x,\mathbf{x}\in\mathbb{C}^L,\mathbf{T}\in\mathcal{T}_\mathbf{N}} \|\mathbf{y} - \mathbf{G}\mathbf{x}\|_2^2 + \eta\big(x + \operatorname{Tr}\{\mathbf{T}\}\big)$$
$$\text{s.t.} \quad \begin{bmatrix}\mathbf{T} & \mathbf{x}\\ \mathbf{x}^\dagger & x\end{bmatrix} \succeq 0$$

MATRIX T HAS, E.G., A 4-DIMENSIONAL BLOCK LEVEL TOEPLITZ STRUCTURE

$\mathbf{T}$ $\mathbf{x}$ OUTPUTS FROM THE ATOMIC NORM OPTIMIZATION

**Decomposition algorithm and parameter extraction** (505)

FREQUENCY OUTPUTS FROM DECOMPOSITION

Apply Algorithm to decompose 4 dimensional block Toeplitz matrix $\mathbf{T}$ and extract the frequencies
$$\mathbf{f}_{1:K} = [\mathbf{f}_1^\mathsf{T}, \mathbf{f}_2^\mathsf{T}, \ldots, \mathbf{f}_K^\mathsf{T}]^\mathsf{T}$$
with
$$\mathbf{f}_k = [\mathbf{f}_k^x, \mathbf{f}_k^y, \mathbf{f}_k^\tau, \mathbf{f}_k^\nu]$$

4-d Decomposition algorithm

ECHO 1 $\mathbf{f}_1 = [\mathbf{f}_1^x, \mathbf{f}_1^y, \mathbf{f}_1^\tau, \mathbf{f}_1^\nu]$

ECHO 2 $\mathbf{f}_2 = [\mathbf{f}_2^x, \mathbf{f}_2^y, \mathbf{f}_2^\tau, \mathbf{f}_2^\nu]$

ECHO 3 $\mathbf{f}_K = [\mathbf{f}_K^x, \mathbf{f}_K^y, \mathbf{f}_K^\tau, \mathbf{f}_K^\nu]$

Apply relation between frequencies and relevant parameters $(\theta_k, \rho_k, \tau_k, \nu_k)$ to extract azimuth, elevation, delay and Doppler shift parameter values

FIG. 5

| 601 | 603 | 605 | 607 |
|---|---|---|---|
| **Decomposition in the spatial X dimension** | **Decomposition in the spatial Y dimension** | **Decomposition in the range dimension** | **Decomposition in the Doppler dimension** |

Obtain a Cholesky decomposition of

$$\mathbf{T} = \mathbf{C_{XYRF}}\mathbf{C_{XYRF}^{\dagger}}$$

Split $\mathbf{C_{XYRF}}$ in $J_x$ blocks

$$\mathbf{C_{XYRF}} = \begin{bmatrix} \mathbf{C}_{0YRF} \\ \mathbf{C}_{1YRF} \\ \vdots \\ \mathbf{C}_{(J_x-1)YRF} \end{bmatrix}$$

Split $\mathbf{C}_{0YRF}$ in $J_y$ blocks

$$\mathbf{C}_{0YRF} = \begin{bmatrix} \mathbf{C}_{00RF} \\ \mathbf{C}_{01RF} \\ \vdots \\ \mathbf{C}_{0(J_y-1)RF} \end{bmatrix}$$

Split $\mathbf{C}_{00RF}$ in $M$ blocks

$$\mathbf{C}_{00RF} = \begin{bmatrix} \mathbf{C}_{000F} \\ \mathbf{C}_{001F} \\ \vdots \\ \mathbf{C}_{00(M-1)F} \end{bmatrix}$$

Find unitary matrix $\mathbf{U_X} = \mathbf{K_X}\mathbf{X}\mathbf{K_X^{\dagger}}$ such that

Find unitary matrix $\mathbf{U_Y} = \mathbf{K_Y}\mathbf{Y}\mathbf{K_Y^{\dagger}}$ such that

Find unitary matrix $\mathbf{U_R} = \mathbf{K_R}\mathbf{R}\mathbf{K_R^{\dagger}}$ such that

Find unitary matrix $\mathbf{U_F} = \mathbf{K_F}\mathbf{F}\mathbf{K_F^{\dagger}}$ such that

$$\begin{bmatrix} \mathbf{C}_{0YRF} \\ \mathbf{C}_{1YRF} \\ \vdots \\ \mathbf{C}_{(J_x-2)YRF} \end{bmatrix} \mathbf{U_X} = \begin{bmatrix} \mathbf{C}_{1YRF} \\ \mathbf{C}_{2YRF} \\ \vdots \\ \mathbf{C}_{(J_x-1)YRF} \end{bmatrix}$$

$$\begin{bmatrix} \mathbf{C}_{00RF} \\ \mathbf{C}_{01RF} \\ \vdots \\ \mathbf{C}_{0(J_y-2)RF} \end{bmatrix} \mathbf{U_Y} = \begin{bmatrix} \mathbf{C}_{01RF} \\ \mathbf{C}_{02RF} \\ \vdots \\ \mathbf{C}_{0(J_y-1)RF} \end{bmatrix}$$

$$\begin{bmatrix} \mathbf{C}_{000F} \\ \mathbf{C}_{001F} \\ \vdots \\ \mathbf{C}_{00(M-2)F} \end{bmatrix} \mathbf{U_R} = \begin{bmatrix} \mathbf{C}_{001F} \\ \mathbf{C}_{002F} \\ \vdots \\ \mathbf{C}_{00(M-1)F} \end{bmatrix}$$

$$\mathbf{C}_{000[0:F-2]}\mathbf{U_F} = \mathbf{C}_{000[1:F-1]}$$

$$\mathbf{X} = \mathrm{diag}\{e^{i2\pi f_1^x}, \ldots, e^{i2\pi f_K^x}\}$$

$$\mathbf{Y} = \mathrm{diag}\{e^{i2\pi f_1^y}, \ldots, e^{i2\pi f_K^y}\}$$

$$\mathbf{R} = \mathrm{diag}\{e^{i2\pi f_1^\tau}, \ldots, e^{i2\pi f_K^\tau}\}$$

$$\mathbf{F} = \mathrm{diag}\{e^{i2\pi f_1^v}, \ldots, e^{i2\pi f_K^v}\}$$

FIG. 6

FIG. 7

701

SMART ENVIRONMENT SYSTEM 703

SUB-ENVIRONMENT SELECT: HOME 705

- OBSERVATION TIME: 707
  - ■ NOW
  - ☐ SPECIFY VALUE: [          ]

- LOOK-BACK TIME WINDOW: 709
  - ☐ UNBOUNDED
  - ■ SPECIFY VALUE: [ 10 min ]

- TARGET ANALYSIS: 711
  - CATEGORY: [ ACTIVITY ]

713

723

719

721

1 mph

717

715

EP 3 933 432 A1

## FIG. 8

880 LOCAL NETWORK

884 INTERNET SERVICE PROVIDER

890 INTERNET

882 HOST

878 NETWORK LINK

892 SERVER

800

870 COMMUNICATION INTERFACE

810 BUS

808 STORAGE DEVICE

804 MEMORY

802 PROCESSOR

820 APPLICATION SPECIFIC IC (ASIC)

806 READ ONLY MEMORY

816 POINTING DEVICE

812 INPUT DEVICE

814 DISPLAY

EP 3 933 432 A1

FIG. 9

900

PROCESSOR
903

DSP 907

ASIC 909

BUS 901

MEMORY 905

FIG. 10

MOBILE TERMINAL 1001

1017

1035

1021 Duplexer

1037 LNA

1019 PA

1033 Synthesizer

1039 Down-Converter

1031 Up-Converter

1020 Battery Interface & Power Control

1041 Demodulator

1029 RF Interface

1027 Modulator

1015

1025 Equalizer

1047 Keyboard

1007 Display

1049 SIM Card

1005 DSP

1003 MCU

ASIC BACKPLANE

1009 AUDIO INTERFACE

1013 CODEC

1043 DAC

1023 ADC

1011  1045

1051 MEMORY

Europäisches
Patentamt

European
Patent Office

Office européen
des brevets

# EUROPEAN SEARCH REPORT

**Application Number**

EP 20 38 2598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU WEI ET AL: "Target Localization for FDA-MIMO Radar with Random Frequency Increment via Atomic Norm Minimization", 2019 IEEE MTT-S INTERNATIONAL MICROWAVE BIOMEDICAL CONFERENCE (IMBIOC), IEEE, vol. 1, 6 May 2019 (2019-05-06), pages 1-4, XP033583629, DOI: 10.1109/IMBIOC.2019.8777927 [retrieved on 2019-07-26] | 1-8, 12-17 | INV. G01S7/292 G01S7/295 G01S7/03 G01S13/10 G01S13/42 G01S13/524 G01S13/86 G01S13/88 |
| A | * abstract * * paragraphs [0011], [0111] * | 9-11 | |
| X | REINHARD HECKEL: "Super-Resolution MIMO Radar", ARXIV.ORG, CORNELL UNIVERSITY LIBRARY, 201 OLIN LIBRARY CORNELL UNIVERSITY ITHACA, NY 14853, 11 May 2016 (2016-05-11), XP080700762, | 1-8, 12-17 | ADD. G01S13/02 |
| A | * abstract * * paragraphs [0002] - [0005]; figure 1 * | 9-11 | |

**TECHNICAL FIELDS SEARCHED (IPC)**

G01S

The present search report has been drawn up for all claims

| Place of search | Date of completion of the search | Examiner |
|---|---|---|
| Munich | 27 November 2020 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)